# EUROPEAN PATENT APPLICATION

(11) **EP 4 307 771 A1**
(43) Date of publication of application: **17.01.2024**
(21) Application number: 21943367.9
(22) Date of filing: 29.05.2021
(51) Int. Cl.: H04W 36/30

(54) **COMMUNICATION METHOD AND APPARATUS**

(71) Applicant: Huawei Technologies Co., Ltd., Shenzhen, Guangdong 518129 (CN)
(72) Inventor: LUO, Qingquan, Shenzhen, Guangdong 518129 (CN)
(74) Representative: MERH-IP Matias Erny Reichl Hoffmann Patentanwälte PartG mbB
(86) International application number: PCT/CN2021/097051
(87) International publication number: WO 2022/251985

(57) **Abstract**

A communication method and apparatus are provided. The method includes: A terminal device sends a first message to a first network device in a first network. When the terminal device includes only a first subscriber identity module card, the first message includes first capability information, and a switching delay indicated by the first capability information is a first delay; or when the terminal device includes the first subscriber identity module card and a second subscriber identity module card, the first message includes second capability information, a switching delay indicated by the second capability information is a second delay, the second delay is greater than the first delay, and the switching delay is a delay required for the terminal device to switch between different carriers in the first network. According to the method, the terminal device can adaptively report the switching delay. For example, when the terminal device includes only one subscriber identity module card, the terminal device may report the smaller first delay; or when the terminal device includes two subscriber identity module cards, the terminal device may report the larger second delay. In this way, an uplink transmission capability can be improved.

## Description

### TECHNICAL FIELD

This application relates to the field of wireless communication technologies, and in particular, to a communication method and apparatus.

### BACKGROUND

With development of communication technologies, a terminal device having a dual registration function is widely used. The terminal device having the dual registration function can support two subscriber identity module (subscriber identity module, SIM) cards, so that the terminal device can simultaneously register with two networks. For the terminal device having the dual registration function, if two SIM cards are in use, the terminal device needs to register with two networks. The terminal device may use a dual SIM dual standby (dual SIM dual standby, DSDS) manner, and perform service transmission in the two networks by using a radio frequency front-end in a time-division multiplexing manner. The terminal device may determine, based on a service priority, a network in which the radio frequency front-end is preferentially used for a service. In the DSDS manner, the terminal device can perform service transmission with only one network each time, in other words, cannot simultaneously perform service transmission with two networks. When performing switching between different carriers, the terminal device may perform switching based on a maximum capability of the terminal device. However, this may cause resource contention, increase a bit error rate, and increase a delay.

To avoid the foregoing defects, a dual SIM dual active (dual SIM dual active, DSDA) manner may alternatively be used. The terminal device uses only some radio frequency resources to process service data in each network, so that the terminal device can simultaneously perform service transmission with the two networks. In the DSDA manner, when the terminal device performs switching between different carriers, a switching delay is increased because of limited radio frequency resources.

### SUMMARY

Implementations of this application aim to provide a communication method and apparatus, to adaptively adjust a switching delay of a terminal device in a DSDA manner.

It should be understood that, in the solutions provided in this application, a communication apparatus may be a wireless communication device, or may be some components in a wireless communication device, for example, integrated circuit products such as a system chip or a communication chip. The wireless communication device may be a computer device that supports a wireless communication function.

Specifically, the wireless communication device may be a terminal such as a smartphone, or may be a radio access network device such as a base station. The system chip may also be referred to as a system on a chip (system on a chip, SoC), or referred to as an SoC chip for short. The communication chip may include a baseband processing chip and a radio frequency processing chip. The baseband processing chip sometimes is also referred to as a modem (modem) or a baseband chip. The radio frequency processing chip sometimes is also referred to as a radio frequency transceiver (transceiver) or a radio frequency chip. In a physical implementation, some or all chips in the communication chip may be integrated into the SoC chip. For example, the baseband processing chip is integrated into the SoC chip, but the radio frequency processing chip is not integrated into the SoC chip.

According to a first aspect, a communication method is provided. The method is applied to a terminal device having a capability of supporting dual SIMs, and includes: The terminal device determines a first message, where when the terminal device includes only a first subscriber identity module card, the first message includes first capability information, and a switching delay indicated by the first capability information is a first delay; or when the terminal device includes the first subscriber identity module card and a second subscriber identity module card, the first message includes second capability information, a switching delay indicated by the second capability information is a second delay, the second delay is greater than the first delay, and the switching delay is a delay required for the terminal device to switch between different carriers in a first network corresponding to the first subscriber identity module card; and the terminal device sends the first message to a first network device in the first network.

In an existing solution, when reporting a capability, the terminal device having the dual-SIM capability reports the capability only based on a minimum capability, for example, reports only the second delay each time. However, according to the method provided in this embodiment of this application, the terminal device having the capability of supporting dual SIMs can adaptively report capability information. For example, when the terminal device includes only one subscriber identity module card, the terminal device may report the smaller first delay; or when the terminal device includes two subscriber identity module cards, the terminal device may report the larger second delay. In this way, an uplink transmission capability can be improved.

In a possible implementation, when the first message includes the first capability information, a delay for switching between a first carrier and a second carrier by the terminal device is the first delay; or
when the first message includes the second capability information, a delay for switching between the first carrier and the second carrier by the terminal device is the second delay.

The first carrier and the second carrier are carriers configured by the first network device for the terminal device.

In a possible implementation, the first carrier is an uplink carrier, and the second carrier is an uplink carrier.

In a possible implementation, the terminal device sends a second message to a second network device in a second network corresponding to the second subscriber identity module card.

When the terminal device includes only the first subscriber identity module card, the second message includes third capability information, and the third capability information indicates a third delay; or when the terminal device includes the first subscriber identity module card and the second subscriber identity module card, the second message includes fourth capability information, the fourth capability information indicates a fourth delay, the fourth delay is greater than the third delay, and each of the fourth delay and the third delay is a delay required for the terminal device to switch between different carriers in the second network.

In a possible implementation, the first message is a capability information reporting message, the capability information reporting message includes an uplink transmit path switching period field, and the uplink transmit path switching period field is used to carry the first capability information or the second capability information.

According to a second aspect, this application further provides a communication apparatus. The communication apparatus has a function of implementing any method provided in the first aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the terminal device in the foregoing method. The communicati on apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and a device such as a network device.

In a possible implementation, the communication apparatus includes corresponding functional modules, configured to implement steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the first aspect. Details are not described herein again.

According to a third aspect, a communication method is provided. The method is applied to a terminal device having a dual-SIM capability, and includes: The terminal device sends first indication information to a first network device in a first network, where the first indication information indicates a fifth delay; and when the terminal device is in a connected mode in the first network, and the terminal device is in the connected mode in a second network, the terminal device sends second indication information to the first network device, where the second indication information indicates a sixth delay, the sixth delay is greater than the fifth delay, and each of the fifth delay and the sixth delay is a delay required for the terminal device to switch between different carriers in the first network.

According to the method provided in this application, when the terminal device having the dual-SIM capability is in the connected mode in only one network, the terminal device may perform switching between carriers based on the smaller fifth delay; or when the terminal device is in the connected mode in two networks, the terminal device may perform switching between carriers based on the larger sixth delay. In this way, a switching capability can be adaptively adjusted, and data transmission performance can be improved.

In a possible implementation, when the terminal device is in the connected mode in the first network, and the terminal device is in a non-connected mode in the second network, the terminal device performs switching between a first carrier and a second carrier based on the fifth delay, and the first carrier and the second carrier are carriers configured by the first network device for the terminal device.

In a possible implementation, when the terminal device is in the connected mode in the first network, and the terminal device is in the connected mode in the second network, the terminal device performs switching between the first carrier and the second carrier based on the sixth delay.

In a possible implementation, if the terminal device keeps in the connected mode in the first network, and the terminal device releases a connection to the second network, the terminal device sends the first indication information to the first network device.

In a possible implementation, the first carrier is an uplink carrier, and the second carrier is an uplink carrier.

In a possible implementation, the first indication information or the second indication information is in an uplink transmit path switching period field in a capability information reporting message.

According to a fourth aspect, this application further provides a communication apparatus. The communication apparatus has a function of implementing any method provided in the third aspect. The communication apparatus may be implemented by hardware, or may be implemented by executing corresponding software by hardware. The hardware or the software includes one or more units or modules corresponding to the foregoing function.

In a possible implementation, the communication apparatus includes a processor. The processor is configured to support the communication apparatus in performing a corresponding function of the terminal device in the foregoing method. The communication apparatus may further include a memory. The memory may be coupled to the processor, and the memory stores program instructions and data that are necessary for the communication apparatus. Optionally, the communication apparatus further includes a communication interface. The communication interface is configured to support communication between the communication apparatus and a device such as a network device.

In a possible implementation, the communication apparatus includes corresponding functional modules, configured to implement steps in the foregoing method. The function may be implemented by hardware, or may be implemented by executing corresponding software by hardware. The hardware or software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method according to the third aspect. Details are not described herein again.

According to a fifth aspect, a communication apparatus is further provided, and includes a processor and a memory.

The memory is configured to store program instructions, and the processor is configured to execute the program instructions stored in the memory, so that the communication apparatus implements the method in any one of the possible designs according to any one of the foregoing aspects.

According to a sixth aspect, a communication apparatus is further provided, and includes a processor and an interface circuit.

The interface circuit is configured to access a memory, and the memory stores program instructions. The processor is configured to access the memory through the interface circuit, and execute the program instructions stored in the memory, so that the communication apparatus implements the method in any one of the possible designs according to any one of the foregoing aspects.

According to a seventh aspect, a communication apparatus is further provided, and includes a processor and a memory.

The memory is configured to store program instructions, and the processor is configured to execute the program instructions stored in the memory, so that the communication apparatus implements the method in any one of the possible designs according to any one of the foregoing aspects.

According to an eighth aspect, a communication apparatus is further provided, and includes:
a processor and an interface circuit, where the interface circuit is configured to access a memory, and the memory stores program instructions; and the processor is configured to access the memory through the interface circuit, and execute the program instructions stored in the memory, so that the communication apparatus implements the method in any one of the possible designs according to any one of the foregoing aspects.

According to a ninth aspect, a communication apparatus is provided. The apparatus may include: a storage unit, configured to store program instructions; and a processing unit, configured to execute the program instructions in the storage unit, to implement the method in any one of the possible designs according to any one of the aspects in the foregoing plurality of technical solutions.

The storage unit may be a memory, for example, a volatile memory, configured to cache the program instructions. The program instructions may be loaded into the storage unit from another non-volatile memory when a data scheduling method is performed. Certainly, the storage unit may alternatively be a non-volatile memory, and is also integrated inside a chip. The processing unit may be a processor, for example, one or more processing cores of the chip.

According to a tenth aspect, a computer-readable storage medium is provided. The computer storage medium stores computer-readable instructions. When a computer reads and executes the computer-readable instructions, a communication apparatus is enabled to perform the method in any one of the foregoing possible designs.

According to an eleventh aspect, a computer program product is provided. When a computer reads and executes the computer program product, a communication apparatus is enabled to perform the method in any one of the possible designs according to any one of the foregoing aspects.

According to a twelfth aspect, a chip is provided. The chip is connected to a memory, and is configured to read and execute a software program stored in the memory, to implement the method in any one of the possible designs according to any one of the foregoing aspects.

### BRIEF DESCRIPTION OF DRAWINGS

FIG. 1 is a schematic diagram of a network architecture to which an embodiment of this application is applicable;
FIG. 2 is a schematic diagram of a structure of a communication apparatus according to an embodiment of this application;
FIG. 3 is a schematic diagram of a structure of a communication apparatus according to an embodiment of this application;
FIG. 4 is a schematic flowchart of a communication method according to an embodiment of this application;
FIG. 5 is a schematic diagram of occupation of a radio frequency resource according to an embodiment of this application;
FIG. 6 is a schematic diagram of carrier switching according to an embodiment of this application;
FIG. 7 is a schematic diagram of occupation of a radio frequency resource according to an embodiment of this application;
FIG. 8 is a schematic diagram of carrier switching according to an embodiment of this application;
FIG. 9 is a schematic flowchart of a communication method according to an embodiment of this application;
FIG. 10 is a schematic diagram of carrier switching according to an embodiment of this application;
FIG. 11 is a schematic diagram of carrier switching according to an embodiment of this application;
FIG. 12 is a schematic diagram of a structure of a communication apparatus according to an embodiment of this application; and
FIG. 13 is a schematic diagram of a structure of a communication apparatus according to an embodiment of this application.

### DESCRIPTION OF EMBODIMENTS

The following further describes the technical solutions provided in this application with reference to accompanying drawings and embodiments. It should be understood that a system structure and a service scenario provided in embodiments of this application are mainly intended to explain some possible implementations of the technical solutions in this application, and shall not be construed as a unique limitation on the technical solutions in this application. A person of ordinary skill in the art may know that, as a system evolves and an updated service scenario emerges, the technical solutions provided in this application are still applicable to same or similar technical problems.

The technical solutions in embodiments of this application may be applied to various wireless communication systems, for example, a long term evolution (long term evolution, LTE) system, an NR system, and a future wireless communication system. This is not limited herein.

A wireless communication system may include devices that provide a wireless network service and devices that use a wireless network service. The devices that provide the wireless network service are devices that form a wireless communication network, and may be referred to as network devices (network equipment) or network elements (network elements) for short. The network device is typically owned by an operator or an infrastructure provider, and is operated or maintained by these vendors. The network device may be further classified into a radio access network (radio access network, RAN) device and a core network (core network, CN) device. A typical RAN device includes a base station (base station, BS).

It should be understood that the base station sometimes may also be referred to as a wireless access point (access point, AP) or a transmission reception point (transmission reception point, TRP). Specifically, the base station may be a generation NodeB (generation NodeB, gNB) in a 5G new radio (new radio, NR) system or an evolved NodeB (evolved NodeB, eNB) in a 4G long term evolution (long term evolution, LTE) system. Base stations may be classified into a macro base station (macro base station) and a micro base station (micro base station) based on different physical forms or transmit powers of the base stations. The micro base station sometimes is also referred to as a miniature base station or a small cell (small cell).

The device that uses the wireless network service may be referred to as a terminal device (terminal) for short. The terminal device can establish a connection to the network device, and provide a specific wireless communication service for a user based on a service of the network device. It should be understood that, because the terminal device has a closer relationship with the user, the terminal device sometimes is also referred to as user equipment (user equipment, UE) or a subscriber unit (subscriber unit, SU). In addition, compared with a base station that is usually placed at a fixed location, the terminal device usually moves along with the user, and sometimes is also referred to as a mobile station (mobile station, MS). In addition, some network devices such as a relay node (relay node, RN) or a wireless router sometimes may also be considered as terminal devices because the network devices have a UE identity or belong to a user.

Specifically, the terminal device may be a mobile phone (mobile phone), a tablet computer (tablet computer), a laptop computer (laptop computer), a wearable device (for example, a smart watch, a smart band, a smart helmet, or smart glasses), or other devices that have a wireless access capability, for example, an intelligent vehicle and various internet of things (internet of things, IOT) devices including various smart home devices (such as a smart meter and a smart home appliance) and smart city devices (such as a security or monitoring device and an intelligent road transportation facility).

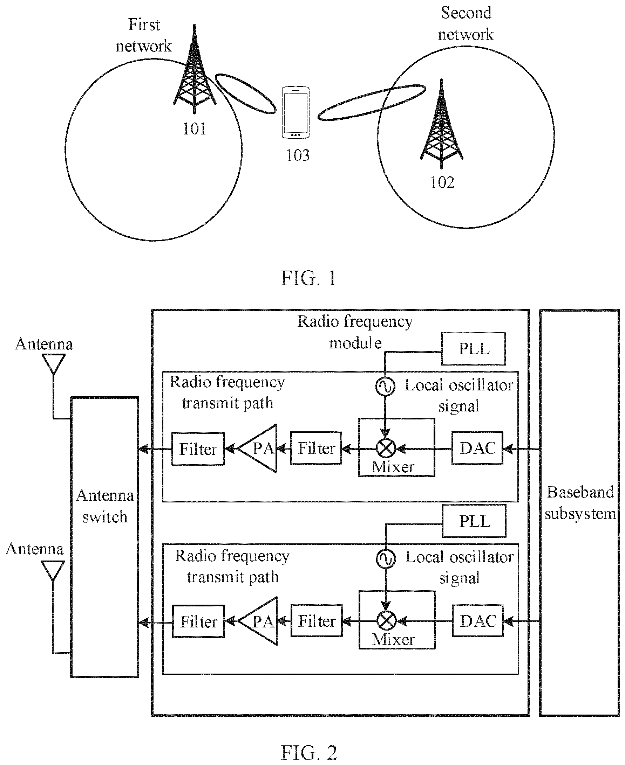

In embodiments of this application, the terminal device may have a capability of registering with at least two networks, for example, have a dual-network registration capability. In other words, the terminal device may simultaneously register with two networks. For example, FIG. 1 is a schematic diagram of a network architecture to which an embodiment of this application is applicable. In FIG. 1, a first network includes a first network device 101, and a second network includes a second network device 102. A terminal device 103 may simultaneously register with both the first network and the second network. The terminal device 103 may be attached to a cell in the first network device 101 based on first identity information, and may be attached to a cell in the second network device 102 based on second identity information.

In embodiments of this application, the terminal device may support dual connectivity (dual connectivity, DC), a supplementary uplink (supplementary uplink, SUL) carrier, carrier aggregation (carrier aggregation, CA), and the like in any network.

The first network and the second network may belong to a same operator, or may belong to different operators. The first network and the second network may belong to a same type of network, for example, both belong to an NR network; or may belong to different types of networks. For example, the first network is an LTE network, and the second network is an NR network.

In embodiments of this application, "identity information" is a logical concept. The "identity information" may correspond to a subscriber identity module (subscriber identity module, SIM) card, subscriber information, a virtual SIM card, or a subscriber identity (for example, an international mobile subscriber identity (international mobile subscriber identity, IMSI)/a temporary mobile subscriber identity (temporary mobile subscriber identity, TMSI)), and is not limited to a natural person subscriber or a physical terminal (a mobile phone).

From a perspective of a network side, different "identity information" logically corresponds to different communication entities served by the network side. For example, for the network side, a terminal device having a dual registration function means two communication entities. For another example, when a " subscriber " corresponds to the SIM card or the subscriber information, the network side identifies, as two different communication entities, two terminal devices having different SIM cards or different subscriber information, or identifies, as a plurality of different communication entities, a same terminal device having a plurality of different SIM cards or a plurality of pieces of subscriber information, even if actually, the terminal device having the plurality of different SIM cards or the plurality of pieces of subscriber information is only one physical entity.

In embodiments of this application, the terminal device may include a plurality of radio frequency transmit paths. For example, FIG. 2 is a schematic diagram of a structure of a terminal device according to an embodiment of this application. In FIG. 2, the terminal device includes a radio frequency module, a phase locked loop (phase locked loop, PLL), a plurality of antennas, and a baseband subsystem. The radio frequency module may include modules such as a radio frequency transmit path and a radio frequency receive path. For ease of description, FIG. 2 shows only the radio frequency transmit path included in the radio frequency module. The radio frequency transmit path may include modules such as a digital-to-analog converter (digital-to-analog converter, DAC), a filter, a power amplifier (power amplifier, PA), and a mixer (mixer). The baseband subsystem may also include one or more processing cores, hardware accelerators (hardware accelerators, HACs), a cache, and the like.

In FIG. 2, each radio frequency transmit path corresponds to one PLL. In an actual application, a plurality of radio frequency transmit paths may share one PLL. This is not limited in embodiments of this application.

It should be understood that FIG. 2 is merely an example. The terminal device in FIG. 2 shows only main components. The terminal device may further include another module, for example, may include a memory (memory) or a massive storage (massive storage).

The baseband subsystem may extract useful information or data bits from a baseband signal, or convert information or data bits into a to-be-sent baseband signal. The information or the data bits may be data that indicates user data or control information such as a voice, a text, or a video. For example, the baseband subsystem may implement modulation and demodulation, encoding and decoding, and other signal processing operations. Different radio access technologies such as 5G NR and 4G LTE usually have different baseband signal processing operations. Therefore, to support convergence of a plurality of types of mobile communication modes, the baseband subsystem may simultaneously include the plurality of processing cores or the plurality of HACs.

For the radio frequency transmit path, a radio frequency receiver in the radio frequency transmit path sends a signal based on a local oscillator signal provided by the PLL in the following manner: The radio frequency transmit path may receive the baseband signal from the baseband subsystem, and after being processed by a digital frequency converter, the baseband signal may be converted into an analog signal through the digital-to-analog converter (digital-to-analog converter, DAC). The analog signal is up-converted into a radio frequency signal through the mixer by using the local oscillator signal. The radio frequency signal may be processed by the filter and the power amplifier (power amplifier, PA), selected by an antenna switch, and finally radiated from a selected antenna.

In embodiments of this application, the baseband subsystem may be used as an independent chip, and the chip may be referred to as a modem (modem) chip. A hardware component of the baseband subsystem may be manufactured and sold as the modem chip. The modem chip sometimes is referred to as a baseband chip or a baseband processor. In addition, the baseband subsystem may be further integrated into a SoC chip, and is manufactured and sold as the SoC chip. Software components of the baseband subsystem may be built in the hardware component of the chip before the chip is delivered; may be imported from another non-volatile memory into the hardware component of the chip after the chip is delivered; or may be downloaded and updated online through a network.

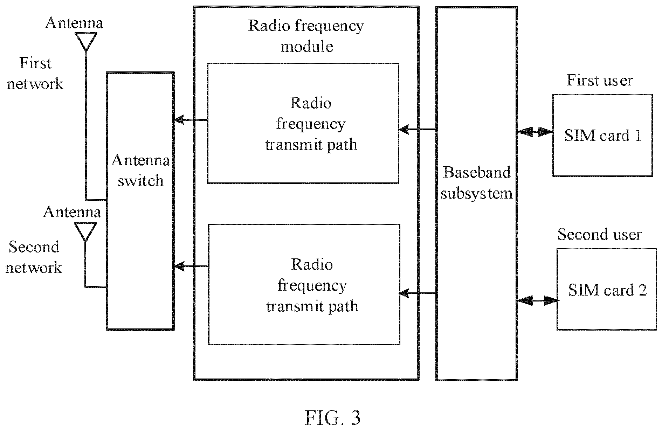

When the terminal device registers with two networks, if a DSDA manner is used, the terminal device uses only some radio frequency resources to process service data in each network, so that the terminal device can simultaneously perform service transmission with the two networks. As shown in FIG. 3, it is assumed that the terminal device includes two radio frequency transmit paths and two antennas. To implement DSDA, one radio frequency transmit path and one antenna in the terminal device are used to process a signal corresponding to a first network to which a SIM card 1 belongs, and the other radio frequency transmit path and the other antenna in the terminal device are used to process a signal corresponding to a second network to which a SIM card 2 belongs.

In embodiments of this application, the terminal device supports an uplink switching (Uplink switching) technology, and the uplink switching may also be referred to as uplink transmit path (transmitter, TX) switching. When the uplink switching technology is used, the terminal device may perform uplink time-division data transmission on two carriers in a time-division multiplexing (time-division multiplexing, TDM) manner. The uplink switching technology may be mainly applied to the following three scenarios: evolved universal terrestrial radio access (Evolved Universal Terrestrial Radio Access, EUTRA) -NR dual connectivity (dual connectivity, DC), supplementary uplink (supplementary uplink, SUL), and carrier aggregation (carrier aggregation, CA).

In these three scenarios, the following cases are discussed in R16.

Case 1: If uplink (uplink, UL) time-division multiplexing (time-division multiplexing, TDM) is configured in a base station, in configuration of an example 1 in Table 1 and an example 1 in Table 2, the base station cannot schedule the terminal device to perform data transmission on a carrier 2. In other words, the base station can only schedule the terminal device to perform data transmission on a carrier 1 and the carrier 2 in the TDM manner, and cannot perform concurrent data transmission.

Case 2: If UL TDM is configured in a base station, in configuration of an example 2 in Table 1 and an example 2 in Table 2, the base station may schedule the terminal device to separately perform data transmission on a carrier 1 or a carrier 2; or the base station may schedule the terminal device to simultaneously perform data transmission on a carrier 1 or a carrier 2. In other words, concurrency on the carrier 1 or the carrier 2 is supported.

This embodiment of this application mainly relates to data transmission performed on the carrier 1 or the carrier 2 in the TDM manner.

In the example 1 in Table 1 and the example 1 in Table 2, the terminal device including the two transmit paths is configured to separately perform data transmission on the two carriers (the carrier 1 and the carrier 2) through one transmit path. In the example 2 in Table 1 and the example 2 in Table 2, the terminal device including the two transmit paths is configured to perform data transmission on one carrier (the carrier 1 or the carrier 2) through two transmit paths.

**Table 1**

| | Quantity (carrier 1+carrier 2) of transmit chains (chains) | Quantity (carrier 1+carrier 2) of antenna ports for uplink transmission |
|---|---|---|
| Example 1 | 1T+1T | 1P+0P |
| Example 2 | 0T+2T | 0P+2P, 0P+1P |

**Table 2**

| | Quantity (carrier 1+carrier 2) of transmit chains (chains) | Quantity (carrier 1+carrier 2) of antenna ports for uplink transmission |
|---|---|---|
| Example 1 | 1T+1T | 1P+0P, 1P+1P, 0P+1P |
| Example 2 | 0T+2T | 0P+2P, 0P+1P |

In Table 1 and Table 2, 1T+1T indicates that the carrier 1 occupies one transmit chain and the carrier 2 occupies one transmit chain. Other cases are deduced by analogy. Details are not described herein again. One transmit chain may include one radio frequency transmit path and one antenna. In Table 1 and Table 2, 1P+1P indicates that the carrier 1 occupies one antenna port and the carrier 2 occupies one antenna port. Other cases are deduced by analogy. Details are not described herein again.

When the terminal device supports the uplink switching technology, data transmission is performed on the carrier 1 and the carrier 2 in the TDM manner, and concurrent data transmission cannot be implemented. Therefore, the terminal device needs to perform carrier switching, to perform data transmission by switching from one carrier to another carrier. The data transmission herein usually may be uplink data transmission. When switching from one carrier to another carrier, the terminal device may need to relock the phase locked loop, so that a local oscillator signal output by the phase locked loop matches a center frequency of a switched carrier. In addition, the terminal device may further need to perform corresponding adaptation on a radio frequency transmit path. Therefore, specific duration is required for carrier switching. The duration may be denoted as an uplink switching period, or the uplink switching period may be referred to as a switching delay. For ease of description, the duration is collectively referred to as a switching delay in the following descriptions. During the uplink switching period, the terminal device does not perform data transmission.

For example, it is assumed that the terminal device includes two radio frequency transmit paths: a first radio frequency transmit path and a second radio frequency transmit path, each radio frequency transmit path corresponds to one PLL, and the terminal device includes two antennas: a first antenna and a second antenna. If two carriers are configured for the terminal device in a first network, the two carriers are respectively a first carrier and a second carrier.

Scenario 1: If the terminal device is registered with only the first network, one radio frequency transmit path may correspond to one carrier. For example, the terminal device may send a signal on the first carrier through the first radio frequency transmit path and the first antenna, and send a signal on the second carrier through the second radio frequency transmit path and the second antenna.

In the scenario 1, when the terminal device switches from the first carrier to the second carrier, a switching delay may be 0.

One radio frequency transmit path corresponds to one carrier, and each radio frequency transmit path may adapt to, in advance, a frequency of a carrier corresponding to the radio frequency transmit path. Therefore, during carrier switching, the radio frequency transmit path in the terminal device does not need to be adjusted again, so that when the terminal device switches to another carrier, signal processing may be directly performed through the radio frequency transmit path corresponding to the carrier.

Scenario 2: If the terminal device registers with only the first network and a second network, and a DSDS manner is used, the terminal device performs service transmission in the two networks through a radio frequency transmit path in the time-division multiplexing manner. In the DSDS manner, the terminal device can perform service transmission with only one network each time, and cannot simultaneously perform service transmission with the two networks. When the terminal device performs switching between different carriers, the terminal device may perform switching based on a maximum capability of the terminal device. For example, when the terminal device switches from the first carrier to the second carrier, a switching delay may be 0.

Scenario 3: If the terminal device registers with only the first network and a second network, and a DSDA manner is used, the terminal device can use only some radio frequency resources to perform service transmission in the two networks, but the terminal device can simultaneously perform service transmission with the two networks. For example, in the DSDA manner, the terminal device sends a signal in the first network through the first radio frequency transmit path and the first antenna, and sends a signal in the second network through the second radio frequency transmit path and the second antenna. In other words, in this case, a plurality of carriers of the terminal device need to share one radio frequency transmit path.

In the scenario 3, the plurality of carriers need to share one radio frequency transmit path. Each time the terminal device switches to another carrier, the radio frequency transmit path needs to perform real-time modulation. Therefore, when the terminal device switches from the first carrier to the second carrier, a switching delay is greater than 0. For example, the switching delay is 140 µs. In this case, when performing carrier switching, the terminal device cannot perform data transmission within the switching delay. Within the switching delay, the terminal device needs to perform adaptation on the first radio frequency transmit path based on a frequency of a carrier to which the terminal device needs to switch.

It can be learned from the foregoing descriptions that, in the DSDA manner, although the terminal device may simultaneously perform service transmission with the two networks, the switching delay is required each time carrier switching is performed, resulting in an increase in a data transmission delay. Therefore, an embodiment of this application may provide a method to resolve the foregoing problem. The following provides detailed descriptions.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art may know that as the network architecture evolves and a new service scenario emerges, the technical solutions provided in embodiments of this application are also applicable to similar technical problems.

In this embodiment of this application, interaction between a network device and a terminal device is used as an example for description. An operation performed by the network device may also be performed by a chip or a module in the network device, and an operation performed by the terminal device may also be performed by a chip or a module in the terminal device. The terminal device has a dual-network registration capability.

When this embodiment of this application is applied to the scenario shown in FIG. 1, the terminal device has a capability of supporting dual SIMs. The dual SIMs herein may be two SIM cards. To be specific, the terminal device has a capability of simultaneously registering with both the first network and the second network. The first network may be a mobile communication network, for example, an NR network or an LTE network. The second network may be the mobile communication network, for example, the NR network or the LTE network. The first network and the second network may belong to a same operator, or may belong to different operators. The first network and the second network may belong to a same type of network, for example, both belong to the NR network; or may belong to different types of networks. For example, the first network is the LTE network, and the second network is the NR network. The first network and the second network may be a same network, or may be different networks.

When the first network and the second network are a same network, it may be considered that the terminal device registers with one network by using two pieces of identity information. This is similar to that a user registers two mobile phone numbers in one operator by using identity information, and two SIM cards corresponding to the two mobile phone numbers are in a same terminal device. For a network, authentication and charging are separately performed on each piece of identity information, and different "identity information" logically corresponds to different communication entities served on a network side. However, actually, because the terminal device has a dual registration function, the two pieces of identity information may share one communication entity, in other words, share the terminal device. However, the network side does not know that the two pieces of identity information share one communication entity, and each network still considers the terminal device as an independent terminal device.

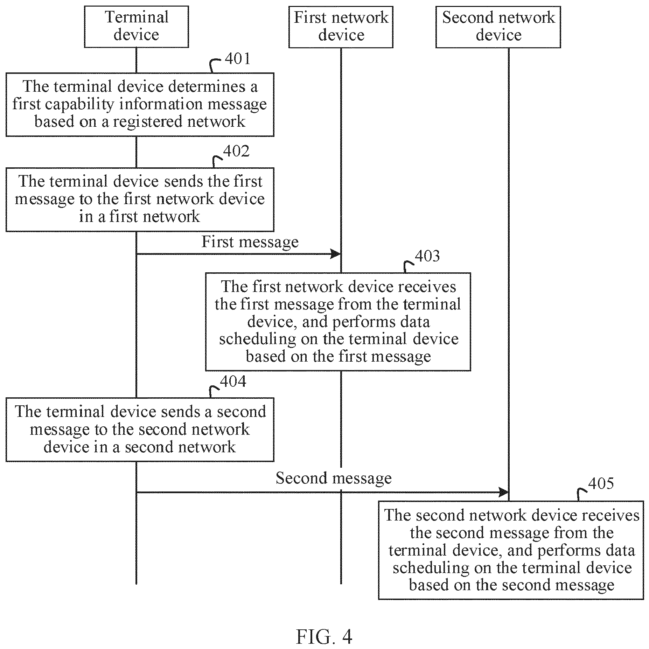

With reference to the foregoing descriptions, FIG. 4 is a schematic flowchart of a communication method according to an embodiment of this application. As shown in FIG. 4, the method includes the following steps.

S401: A terminal device determines a first message.

The first message may be a UE capability information (capability information) reporting message, and the first message may be used to report capability information of the terminal device. The first message may alternatively be another message. This is not limited in this embodiment of this application.

When the terminal device includes only a first subscriber identity module card or registers with only a first network corresponding to the first subscriber identity module card, the terminal device may consider that the terminal device does not need to register with a second network corresponding to a second subscriber identity module card, and the terminal device may perform data transmission in the first network through all radio frequency transmit paths and antennas in the terminal device. In this case, the first message includes first capability information, a switching delay indicated by the first capability information is a first delay, and the first delay may be a maximum delay that can be supported by the terminal device. The switching delay is a delay required for the terminal device to switch between different carriers in the first network corresponding to the first subscriber identity module card.

In this embodiment of this application, when the first message is capability information reporting message, the capability information reporting message includes an uplink transmit path switching period (uplink Tx Switching Period-rl6) field, and the uplink transmit path switching period field may be used to carry the first capability information.

For example, the capability information reporting message may include a bandwidth combination list (BandCombinationList) of an information element. The information element may include the following content:

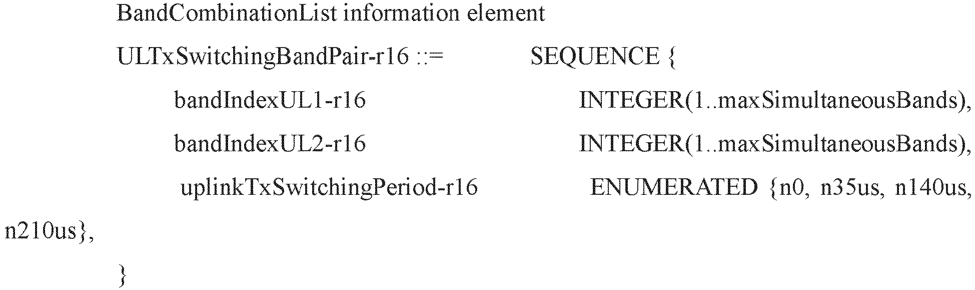

Herein, uplinkTxSwitchingPeriod-r16 may be used to carry the switching delay. A value of the switching delay may be 0, 35 µs, 140 µs, or 210 µs. The value is specifically set based on an actual situation.

In this embodiment of this application, when the terminal device includes the first subscriber identity module card and the second subscriber identity module card, the terminal device may simultaneously register with both the first network and the second network. The first message includes second capability information, and a switching delay indicated by the second capability information is a second delay. In this case, the terminal device can use only one radio frequency transmit path to perform data transmission in the first network. Therefore, the second delay is greater than the first delay.

In this embodiment of this application, the second delay may also be carried by the uplinkTxSwitchingPeriod-r16 field in the first message.

In this embodiment of this application, the first message may further indicate information such as a maximum bandwidth supported by the terminal device or a supported CA type. This is not limited in this embodiment of this application.

With reference to the foregoing descriptions, the switching delay for switching between carriers by the terminal device is used as an example. When the terminal device registers with only the first network, the switching delay reported by the terminal device may be the first delay. In other words, the switching delay for switching between a first carrier and a second carrier by the terminal device is the first delay. When the terminal device registers with the first network and the second network, the switching delay reported by the terminal device may be the second delay. In other words, the switching delay for switching between a first carrier and a second carrier by the terminal device is the second delay. The first carrier and the second carrier are carriers configured by the first network for the terminal device, the second delay is greater than the first delay, and each of the second delay and the first delay is a delay required for the terminal device to switch between different carriers. For example, the first delay is 0, and the second delay is 140 µs.

In this embodiment of this application, the first carrier may be an uplink carrier, and the second carrier may be an uplink carrier. When this application is applied to a DC scenario, for example, applied to an evolved universal terrestrial radio access (evolved universal terrestrial radio access, E-UTRA) -NR dual connectivity scenario, the first carrier may be an uplink carrier in E-UTRA, and the second carrier may be an uplink carrier in NR; or the first carrier may be an uplink carrier in NR, and the second carrier may be an uplink carrier in E-UTRA.

When this application is applied to a supplementary uplink scenario, the first carrier may be an SUL carrier of the second carrier, and the second carrier may be a normal uplink (normal uplink, NUL) carrier; or the second carrier may be an SUL carrier of the first carrier, and the first carrier may be a normal uplink (normal uplink, NUL) carrier.

When this application is applied to a CA scenario, the first carrier may be a single carrier, or may be a carrier obtained by aggregating a plurality of uplink carriers. Correspondingly, the second carrier may be a single carrier, or may be a carrier obtained by aggregating a plurality of uplink carriers.

In this embodiment of this application, there may be a plurality of types of frequency ranges corresponding to the first carrier and the second carrier. For example, the frequency ranges corresponding to the first carrier and the second carrier may fall within at least three band ranges: a low band (low band, LB) ranging from 700 MHz to 900 MHz; a middle high band (middle high band, MHB) ranging from 1400 MHz to 2700 MHz; and an ultra high band (ultra high band, UHB) ranging from 3000 MHz to 5900 MHz.

Certainly, the foregoing is merely an example. The first carrier and the second carrier may alternatively be in another form. Details are not described herein again.

S402: The terminal device sends the first message to a first network device in the first network.

Optionally, in an implementation, the terminal device actively sends the first message to the first network device. In another implementation, the first network device triggers the terminal device to send the first message. For example, the first network device sends a capability information query message to the terminal device, to query a capability of the terminal device. After receiving the capability information query message, the terminal device sends the first message to the first network device.

S403: The first network device receives the first message from the terminal device, and performs data scheduling on the terminal device based on the first message.

For example, if the first message includes the first capability information, when the terminal device performs carrier switching, the first network device may determine that the terminal device cannot perform data transmission within the first delay, and therefore does not perform data scheduling on the terminal device within the first delay.

Optionally, if the terminal device further includes the second subscriber identity module card, the method may further include the following steps.

S404: The terminal device sends a second message to a second network device in the second network.

When the terminal device includes only the first subscriber identity module card, the second message includes third capability information, and the third capability information indicates a third delay. Alternatively, when the terminal device includes the first subscriber identity module card and the second subscriber identity module card, the second message includes fourth capability information, the fourth capability information indicates a fourth delay, and the fourth delay is greater than the third delay. Each of the fourth delay and the third delay is a delay required for the terminal device to switch between different carriers in the second network. For example, the third delay is 0, and the fourth delay is 140 µs.

S405: The second network device receives the second message from the terminal device, and performs data scheduling on the terminal device based on the second message.

In an existing solution, when reporting a capability, the terminal device having the dual-SIM capability reports the capability only based on a minimum capability, for example, reports only the second delay each time. However, according to the method provided in this embodiment of this application, the terminal device having the capability of supporting dual SIMs can adaptively report capability information. For example, when the terminal device includes only one subscriber identity module card, the terminal device may report the smaller first delay; or when the terminal device includes two subscriber identity module cards, the terminal device may report the larger second delay. In this way, an uplink transmission capability can be improved.

With reference to the procedure shown in FIG. 4, the following describes embodiments of this application by using a specific embodiment.

It is assumed that the terminal device includes two radio frequency transmit paths: a first radio frequency transmit path and a second radio frequency transmit path, the first radio frequency transmit path corresponds to one PLL 1, the second radio frequency transmit path corresponds to one PLL 2, and the terminal device includes two antennas: a first antenna and a second antenna.

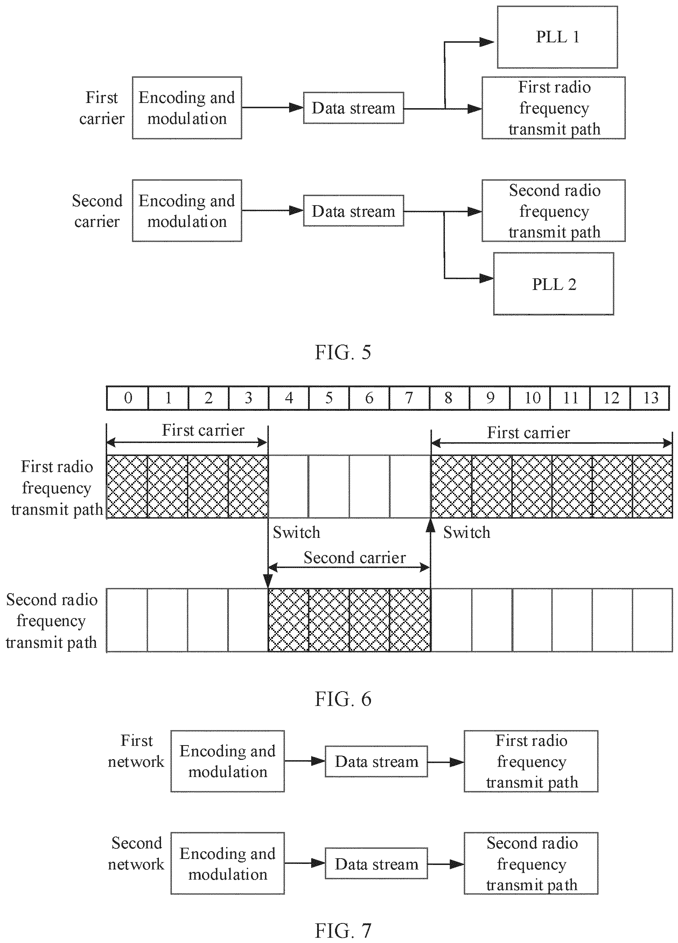

When the terminal device registers with only the first network, the terminal device may process a service in the first network through all radio frequency transmit paths. If two carriers, namely, the first carrier and the second carrier, are configured for the terminal device in the first network, as shown in FIG. 5, one carrier may correspond to one radio frequency transmit path and one antenna. For example, the first carrier corresponds to the first radio frequency transmit path and the first antenna, and the second carrier corresponds to the second radio frequency transmit path and the second antenna. In this case, after being encoded, modulated, and the like, a data stream sent by the first carrier needs to be transmitted to the first radio frequency transmit path, and then radiated through the first antenna. Correspondingly, after being encoded, modulated, and the like, a data stream sent by the second carrier needs to be transmitted to the second radio frequency transmit path, and then radiated through the second antenna. In this case, the first delay for switching between the first carrier and the second carrier by the terminal device may be 0.

In this case, as shown in FIG. 6, it is assumed that the terminal device sends data on the first carrier through the first radio frequency transmit path. In this case, after being processed by the first radio frequency transmit path, the data stream is modulated to the first carrier and sent through the first antenna. If the terminal device determines to switch to the second carrier for service transmission, the terminal device may directly switch to the second radio frequency transmit path to send the data on the second carrier. In FIG. 6, one slot includes 14 orthogonal frequency division multiplexing (orthogonal frequency division multiplexing, OFDM) symbols that are respectively denoted as a symbol 0 to a symbol 13. In the symbol 0 to the symbol 3 in the slot, the terminal device performs data transmission on the first carrier. When the terminal device needs to switch to the second carrier, the terminal device may switch to the second carrier after ending sending data in the symbol 3 in the slot. Because the first delay is 0, the terminal device may perform data transmission on the second carrier starting from the symbol 4 in the slot.

Further, in the symbol 4 to the symbol 7 in the slot, the terminal device performs data transmission on the second carrier. When the terminal device needs to switch to the first carrier, the terminal device may switch to the first carrier after ending sending data in the symbol 7 in the slot. Because the first delay is 0, the terminal device may perform data transmission on the first carrier starting from the symbol 8 in the slot.

In FIG. 6, because the first delay for switching between the carriers by the terminal device is 0, seamless switching can be implemented when the terminal device performs switching between the first carrier and the second carrier. In a switching process, data transmission is not affected, and data transmission efficiency is improved.

When the terminal device registers with the first network and the second network, if two carriers, namely, the first carrier and the second carrier, are configured for the terminal device in the first network, as shown in FIG. 7, the terminal device processes a service in the first network through the first radio frequency transmit path and the first antenna, for example, separately performs data transmission on the first carrier and the second carrier in a time division manner; and the terminal device processes a service in the second network through the second radio frequency transmit path and the second antenna. In this case, the second delay for switching between the first carrier and the second carrier by the terminal device may be 35 µs.

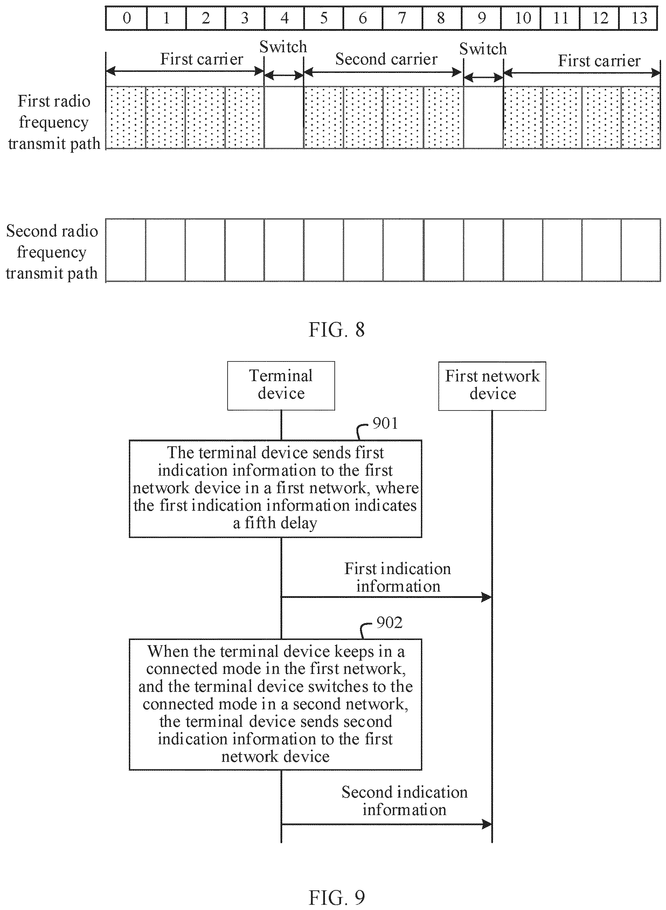

In this case, as shown in FIG. 8, one slot includes 14 OFDM symbols that are respectively denoted as a symbol 0 to a symbol 13. It is assumed that a time length of one OFDM symbol is 71.4 µs. In the symbol 0 to the symbol 3 in the slot, the terminal device performs data transmission on the first carrier. When the terminal device needs to switch to the second carrier, the terminal device may switch to the second carrier after ending sending data in the symbol 3 in the slot. Because the first delay is 35 µs, the terminal device needs to perform switching in the symbol 4, and the terminal device may perform data transmission on the second carrier starting from the symbol 5 in the slot.

Further, in the symbol 5 to the symbol 8 in the slot, the terminal device performs data transmission on the second carrier. When the terminal device needs to switch to the first carrier, the terminal device may switch to the first carrier after ending sending data in the symbol 8 in the slot. Because the first delay is 35 µs, the terminal device needs to perform switching in the symbol 9, and the terminal device may perform data transmission on the first carrier starting from the symbol 10 in the slot. In this case, the terminal device does not use the second radio frequency transmit path to process the service in the first network.

In FIG. 8, the first delay for switching between carriers by the terminal device is 35 µs. Therefore, when the terminal device performs switching between the first carrier and the second carrier, at least one OFDM symbol needs to be reserved for carrier switching.

In this embodiment of this application, the terminal device may alternatively determine the switching delay based on a status of the terminal device in each network.

FIG. 9 is a schematic flowchart of a communication method according to an embodiment of this application. The method includes the following steps.

S901: A terminal device sends first indication information to a first network device in a first network, where the first indication information indicates a fifth delay.

The first indication information may be carried in a capability information reporting message of the terminal device, or may be carried in another message. This is not limited in this embodiment of this application. When a first message is the capability information reporting message, the capability information reporting message may include an uplink Tx Switching Period-r16 field, and the field may be used to carry the first indication information.

In this embodiment of this application, the fifth delay may be a delay required for the terminal device to switch between different carriers in the first network. When the first indication information is carried in the uplink Tx Switching Period-r16 field, a value of the fifth switching delay may be 0, 35 µs, 140 µs, or 210 µs. The value is specifically set based on an actual situation.

In this embodiment of this application, capability information reported by the terminal device to the first network device may include the first indication information or second indication information. The fifth delay indicated by the first indication information is less than a sixth delay indicated by the second indication information. Similarly, the second indication information may be carried in the uplink Tx Switching Period-r16 field in the capability information reporting message.

In this embodiment of this application, the terminal device preferentially reports the first indication information to the first network device. The terminal device may report the second indication information to the first network device in any one of the following scenarios: Scenario 1: The terminal device is in a connected mode in a second network; and Scenario 2: The terminal device needs to perform service data transmission in the first network, and the terminal device is performing service data transmission in a second network.

In this embodiment of this application, when the terminal device is in the connected mode in the first network, and the terminal device is in a non-connected mode in the second network, the terminal device may perform switching between a first carrier and a second carrier based on the fifth delay.

The first carrier and the second carrier are carriers configured by the first network for the terminal device. The first carrier may be an uplink carrier, and the second carrier may be an uplink carrier. When this application is applied to a DC scenario, for example, applied to an evolved E-UTRA-NR dual connectivity scenario, the first carrier may be an uplink carrier in E-UTRA, and the second carrier may be an uplink carrier in NR; or the first carrier may be an uplink carrier in NR, and the second carrier may be an uplink carrier in E-UTRA.

When this application is applied to a supplementary uplink scenario, the first carrier may be an SUL carrier of the second carrier, and the second carrier may be an NUL carrier; or the second carrier may be an SUL carrier of the first carrier, and the first carrier may be an NUL carrier.

When this application is applied to a CA scenario, the first carrier may be a single carrier, or may be a carrier obtained by aggregating a plurality of uplink carriers. Correspondingly, the second carrier may be a single carrier, or may be a carrier obtained by aggregating a plurality of uplink carriers.

In the embodiments of this application, the connected mode may be a radio resource control (radio resource control, RRC) connected (connected) mode, and the non-connected mode may be an RRC idle (idle) mode or an RRC inactive (inactive) mode. The terminal device may perform switching between the RRC connected mode, the RRC idle mode, and the RRC inactive mode based on an actual situation.

In this embodiment of this application, when a status of the terminal device in a second network changes, the switching delay may be updated. For example, when the terminal device switches to the connected mode in the second network, S902 may be performed.

S902: When the terminal device keeps in the connected mode in the first network, and the terminal device switches to the connected mode in the second network, the terminal device sends the second indication information to the first network device.

The second indication information indicates the sixth delay, the sixth delay is a delay required for the terminal device to switch between different carriers in the first network, and the sixth delay is greater than the fifth delay. For example, the fifth delay may be 0, and the sixth delay may be 35 µs.

When the terminal device keeps in the connected mode in the first network, and the terminal device switches to the connected mode in the second network, the terminal device may perform switching between the first carrier and the second carrier based on the sixth delay.

It should be noted that, before S902, when the terminal device keeps in the connected mode in the first network, and the terminal device switches from the non-connected mode to the connected mode in the second network, the terminal device may trigger the first network device to actively query the capability information of the terminal device, to update the switching delay from the fifth delay to the sixth delay. Specifically, the following steps may be included.

Step 1: The terminal device sends a third message to the first network device, where the third message indicates that a capability of the terminal device changes.

Step 2: The first network device sends a capability query message to the terminal device.

After receiving the capability query message, the terminal device performs S902.

According to the method provided in this application, when the terminal device supporting the dual-SIM capability is in the connected mode in only one network, the terminal device may perform switching between carriers based on the smaller fifth delay; or when the terminal device is in the connected mode in two networks, the terminal device may perform switching between carriers based on the larger sixth delay. In this way, a switching capability can be adaptively adjusted, and data transmission performance can be improved.

Optionally, when the terminal device keeps in the connected mode in the first network, and the terminal device releases a connection to the second network or switches to the non-connected mode in the second network, the terminal device may send the first indication information to the first network device, and then the terminal device performs switching between the first carrier and the second carrier based on the fifth delay.

With reference to the procedure shown in FIG. 9, the following describes embodiments of this application by using a specific embodiment.

It is assumed that the terminal device includes two radio frequency transmit paths: a first radio frequency transmit path and a second radio frequency transmit path, the first radio frequency transmit path corresponds to one PLL 1, the second radio frequency transmit path corresponds to one PLL 2, and the terminal device includes two antennas: a first antenna and a second antenna.

When reporting the capability in the first network and the second network, the terminal device reports the capability information based on a maximum capability that can be supported. For example, the switching delay between different carriers reported by the terminal device to the first network is the fifth delay, and the switching delay between the different carriers reported by the terminal device to the second network is the fifth delay.

The terminal device is in a connected mode in the first network. If the terminal device needs to perform service data transmission with the first network, when the terminal device is in a non-connected mode in the second network, or the terminal device does not perform service data transmission with the second network, the terminal device may use all radio frequency resources and antennas to process service data in the first network. In this case, the terminal device may perform switching between the first carrier and the second carrier based on the fifth delay. In other words, a delay for switching between the first carrier and the second carrier by the terminal device is the fifth delay.

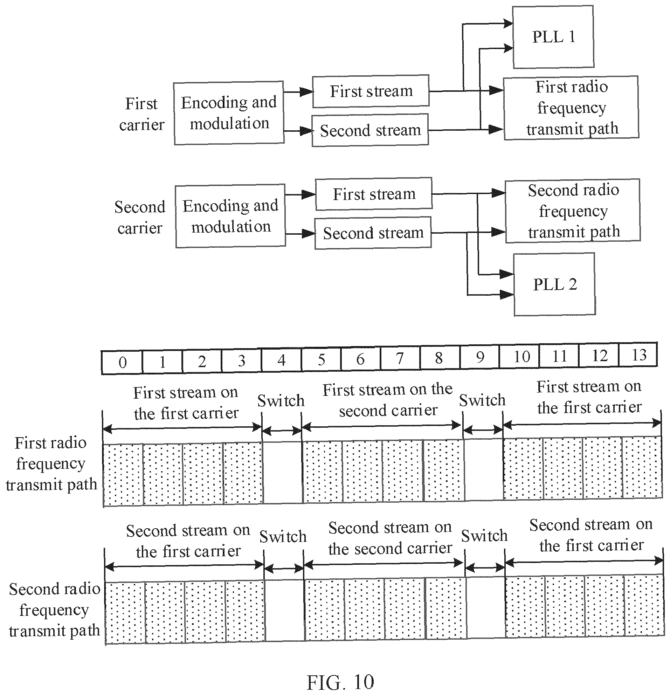

With reference to the foregoing descriptions, as shown in FIG. 10, the terminal device processes a service in the first network through the first radio frequency transmit path and the first antenna, for example, separately performs data transmission on the first carrier and the second carrier in a time division manner. If data on each carrier includes two streams, when performing data transmission on the first carrier, the terminal device needs to process data of a first stream on the first carrier through the first radio frequency transmit path, and process data of a second stream on the first carrier through the second radio frequency transmit path. Correspondingly, when performing data transmission on the second carrier, the terminal device needs to process data of a first stream on the second carrier through the first radio frequency transmit path, and process data of a second stream on the second carrier through the second radio frequency transmit path. In this case, the fifth delay may be 35 µs, and the sixth delay may be 140 µs.

In this case, as shown in FIG. 10, one slot includes 14 OFDM symbols that are respectively denoted as a symbol 0 to a symbol 13. It is assumed that a time length of one OFDM symbol is 71.4 µs. In the symbol 0 to the symbol 3 in the slot, the terminal device performs data transmission on the first carrier. Specifically, in the symbol 0 to the symbol 3 in the slot, the terminal device processes the data of the first stream on the first carrier through the first radio frequency path and the first antenna, and processes the data of the second stream on the first carrier through the second radio frequency path and the second antenna.

When the terminal device needs to switch to the second carrier, the terminal device may switch to the second carrier after ending sending data in the symbol 3 in the slot. Because the fifth delay is 35 µs, the terminal device needs to perform switching in the symbol 4, and the terminal device may perform data transmission on the second carrier starting from the symbol 5 in the slot.

Further, in the symbol 5 to the symbol 8 in the slot, the terminal device performs data transmission on the second carrier. Specifically, in the symbol 5 to the symbol 8 in the slot, the terminal device processes the data of the first stream on the second carrier through the first radio frequency path and the first antenna, and processes the data of the second stream on the second carrier through the second radio frequency path and the second antenna.

When the terminal device needs to switch to the first carrier, the terminal device may switch to the first carrier after ending sending data in the symbol 8 in the slot. Because the fifth delay is 35 µs, the terminal device needs to perform switching in the symbol 9, and the terminal device may perform data transmission on the first carrier starting from the symbol 10 in the slot.

Further, when the terminal device needs to perform service data transmission with the second network, the terminal device may report the second indication information to the first network device, and the terminal device may further report the second indication information to a second network device. In this case, a delay for performing carrier switching by the terminal device in the first network is the sixth delay, and a delay for performing carrier switching in the second network is the sixth delay.

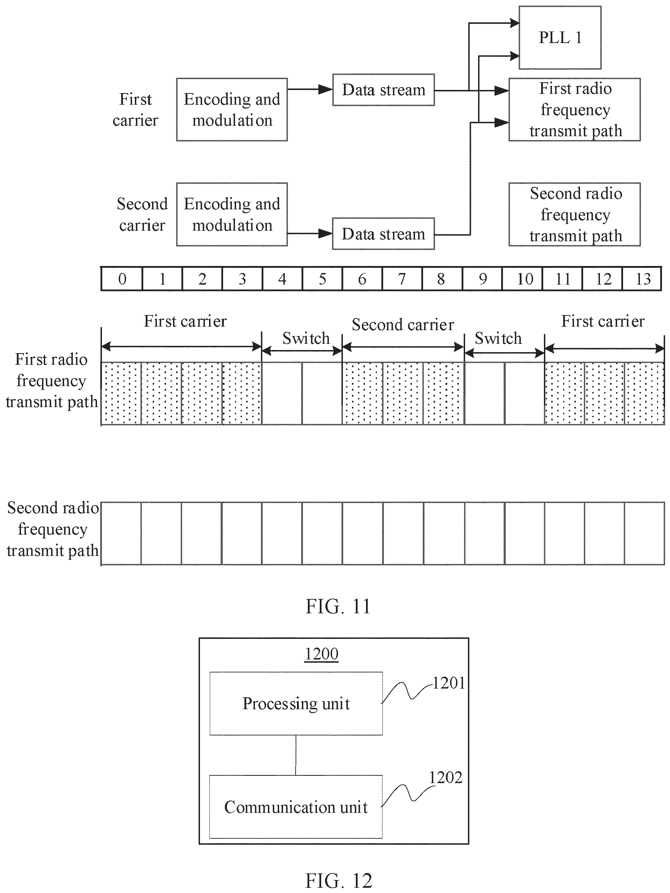

With reference to the foregoing descriptions, as shown in FIG. 11, one slot includes 14 OFDM symbols that are respectively denoted as a symbol 0 to a symbol 13. It is assumed that a time length of one OFDM symbol is 71.4 µs. Because the terminal device can use only one radio frequency transmit path to process the service data in the first network, the first carrier includes only the data of the first stream. For example, in the symbol 0 to the symbol 3 in the slot, the terminal device processes data on the first carrier through the first radio frequency path and the first antenna.

When the terminal device needs to switch to the second carrier, the terminal device may switch to the second carrier after ending sending data in the symbol 3 in the slot. Because the sixth delay is 140 µs, the terminal device needs to perform switching in the symbol 4 and the symbol 5, and the terminal device may perform data transmission on the second carrier starting from the symbol 6 in the slot.

Further, in the symbol 6 to the symbol 8 in the slot, the terminal device performs data transmission on the second carrier. Specifically, in the symbol 6 to the symbol 8 in the slot, the terminal device processes data on the second carrier through the second radio frequency path and the second antenna.

When the terminal device needs to switch to the first carrier, the terminal device may switch to the first carrier after ending sending data in the symbol 8 in the slot. Because the sixth delay is 140 µs, the terminal device needs to perform switching in the symbol 9 and the symbol 10, and the terminal device may perform data transmission on the first carrier starting from the symbol 11 in the slot.

According to the foregoing method, the terminal device actively triggers, based on a service status, a network to query a capability of the terminal device that has established a connection, limits a reporting capability of the terminal device that has newly established the connection, and reports the switching delay again. After the capability of the terminal device that has established the connection is queried, two SIM cards start DSDA dual connectivity.

In conclusion, the terminal device reports the capability in each registered network based on a single-SIM card uplink service. When the single-SIM card uplink service is performed, the terminal device uses all front-end resources, and reports a working capability of the terminal device based on full use of the resources. When the terminal device first initiates service transmission in the first network, and needs to start an uplink service in the second network, to minimize impact on the first network, a DSDS allocation manner is selected when service transmission is started in the second network, and a network capability is directly reported in the second network in a resource-limited manner. In addition, the terminal device triggers, in the first network, RRC to report a capability change of the terminal device, to enable the network to dynamically and actively query a capability of the terminal device in the first network. The terminal device reports a reduction capability in the first network, and the network reconfigures a limited capability after confirmation. In this case, the DSDA manner is used in the first network and the second network for concurrency, and the network capability is reported in the resource-limited manner for the switching delay. After releasing a connection in a network, the terminal device is connected to a card that does not release the card, to trigger the RRC to actively report the capability change of the terminal device to the network. In this case, the terminal device actively reports exclusion of a resource capability. After dual-network registration, a front-end radio frequency resource and an antenna in the terminal device need to be allocated in two networks. When uplink transmission is performed in the two networks, if a high uplink rate further needs to be maintained, in the ENDC, SUL, or CA scenario, specifications of hardware for uplink transmission are reduced, and a quantity of carriers used for uplink transmission is not reduced. For example, some radio frequency resources of the terminal device are used in a network.

The foregoing embodiments may be separately implemented, or may be implemented in combination with each other. In the foregoing descriptions, in different embodiments, differences between the embodiments are described in detail. For content other than the differences, other content between different embodiments may be cross-referenced. Step numbers in the flowcharts described in embodiments of this application are merely an example of an execution procedure, and do not constitute a limitation on an execution sequence of the steps. In embodiments of this application, there is no strict execution sequence between steps that do not have a time sequence dependency relationship with each other. In addition, not all the steps shown in the flowcharts are mandatory steps, and some steps may be added to or deleted from the flowcharts based on an actual requirement.

In the foregoing embodiments provided in this application, the methods provided in embodiments of this application are described from a perspective of interaction between devices. The steps performed by the network device may also be separately implemented by different communication apparatuses.

To implement functions in the method provided in embodiments of this application, the network device, the terminal device, and the communication apparatus may include a hardware structure and/or a software module, and implement the functions by using a hardware structure, a software module, or a combination of a hardware structure and a software module. Whether a function in the functions is performed by using the hardware structure, the software module, or the combination of the hardware structure and the software module depends on particular applications and design constraint conditions of the technical solutions.

In embodiments of this application, module division is an example and is merely a logical function division. In an actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

Same as the foregoing concept, as shown in FIG. 12, an embodiment of this application further provides an apparatus 1200. The communication apparatus 1200 may be the terminal device in FIG. 1, and is configured to implement the method for the terminal device in the foregoing method embodiments. Alternatively, the communication apparatus may be the network device in FIG. 1, and is configured to implement the method corresponding to the network device in the foregoing method embodiments. For a specific function, refer to the descriptions in the foregoing method embodiments.

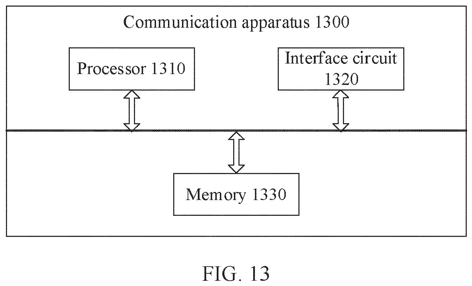

Specifically, the apparatus 1200 may include a processing unit 1201 and a communication unit 1202. In this embodiment of this application, the communication unit may also be referred to as a transceiver unit, and may include a sending unit and/or a receiving unit, which are respectively configured to perform sending and receiving steps of the network device or the terminal device in the foregoing method embodiments. The following describes in detail communication apparatuses provided in the embodiments of this application with reference to FIG. 12 and FIG. 13.

In some possible implementations, behaviors and functions of the terminal device in the foregoing method embodiments may be implemented by the communication apparatus 1200. For example, the method performed by the terminal device in the embodiment in FIG. 4 is implemented. For example, the communication apparatus 1200 may be a terminal device, or a component (for example, a chip or a circuit) used in a terminal device, or a chip or a chip set in the terminal device, or a part that is of a chip and that is configured to perform a related method function. The communication unit 1202 may be configured to perform a receiving or sending operation performed by the terminal device in the embodiment shown in FIG. 4. The processing unit 1201 may be configured to perform an operation other than the receiving or sending operation performed by the terminal device in the embodiment shown in FIG. 4.

In some possible implementations, the communication apparatus has a capability of supporting dual SIMs.

Specifically, the processing unit is configured to determine a first message. When only a first subscriber identity module card is included, the first message includes first capability information, and a switching delay indicated by the first capability information is a first delay. Alternatively, when the first subscriber identity module card and a second subscriber identity module card are included, the first message includes second capability information, a switching delay indicated by the second capability information is a second delay, and the second delay is greater than the first delay. The switching delay is a delay required for the terminal device to switch between different carriers in a first network corresponding to the first subscriber identity module card.

The communication unit is configured to send the first message to a first network device in the first network.

In some possible implementations, when the first message includes the first capability information, a delay for switching between a first carrier and a second carrier is the first delay; or
when the first message includes the second capability information, a delay for switching between the first carrier and the second carrier is the second delay.

The first carrier and the second carrier are carriers configured by the first network device.

In some possible implementations, the first carrier is an uplink carrier, and the second carrier is an uplink carrier.

In some possible implementations, the communication unit is further configured to:
send a second message to a second network device in a second network corresponding to the second subscriber identity module card.

When only the first subscriber identity module card is included, the second message includes third capability information, and the third capability information indicates a third delay. Alternatively, when the first subscriber identity module card and the second subscriber identity module card are included, the second message includes fourth capability information, the fourth capability information indicates a fourth delay, and the fourth delay is greater than the third delay. Each of the fourth delay and the third delay is a delay required for the terminal device to switch between different carriers in the second network.

In some possible implementations, the first message is a capability information reporting message, the capability information reporting message includes an uplink transmit path switching period field, and the uplink transmit path switching period field is used to carry the first capability information or the second capability information.

In some possible implementations, behaviors and functions of the terminal device in the foregoing method embodiments may be implemented by the communication apparatus 1200. For example, the method performed by the terminal device in the embodiment in FIG. 9 is implemented. For example, the communication apparatus 1200 may be a terminal device, or a component (for example, a chip or a circuit) used in a terminal device, or a chip or a chip set in the terminal device, or a part that is of a chip and that is configured to perform a related method function. The communication unit 1202 may be configured to perform a receiving or sending operation performed by the terminal device in the embodiment shown in FIG. 9. The processing unit 1201 may be configured to perform an operation other than the receiving or sending operation performed by the terminal device in the embodiment shown in FIG. 9.

In some possible implementations, the communication apparatus has a capability of supporting dual SIMs.

Specifically, the processing unit is configured to send first indication information to a first network device in a first network through the communication unit, where the first indication information indicates a fifth delay.

The processing unit is configured to: when the communication apparatus is in a connected mode in the first network and is in the connected mode in a second network, send second indication information to the first network device through the communication unit. The second indication information indicates a sixth delay, the sixth delay is greater than the fifth delay, and each of the fifth delay and the sixth delay is a delay required for switching between different carriers in the first network.

In some possible implementations, the processing unit is further configured to: when the communication apparatus is in the connected mode in the first network and is in a non-connected mode in the second network, perform switching between a first carrier and a second carrier based on the fifth delay. The first carrier and the second carrier are carriers configured by the first network device.

In some possible implementations, the processing unit is further configured to: when the communication apparatus is in the connected mode in the first network and is in the connected mode in the second network, perform switching between the first carrier and the second carrier based on the sixth delay.

In some possible implementations, the communication unit is further configured to:
if the communication apparatus keeps in the connected mode in the first network and releases a connection to the second network, send the first indication information to the first network device.

In some possible implementations, the first carrier is an uplink carrier, and the second carrier is an uplink carrier.

In some possible implementations, the first indication information or the second indication information is in an uplink transmit path switching period field in a capability information reporting message.

It should be understood that the descriptions of the apparatus embodiments and the descriptions of the method embodiments correspond to each other. For apparatus structures used to implement the terminal device and the network device in FIG. 4 to FIG. 11, refer to the apparatus 1200. Therefore, for content that is not described in detail, refer to the foregoing method embodiments. For brevity, details are not described herein again.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 1202 and that is configured to implement a receiving function may be considered as a receiving unit, and a component that is in the communication unit 1202 and that is configured to implement a sending function may be considered as a sending unit. In other words, the communication unit 1202 includes the receiving unit and the sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

The foregoing is merely an example. The processing unit 1201 and the communication unit 1202 may further perform another function. For more detailed descriptions, refer to related descriptions in the method embodiments shown in FIG. 4 to FIG. 11. Details are not described herein again.

FIG. 13 shows an apparatus 1300 according to an embodiment of this application. The apparatus shown in FIG. 13 may be an implementation of a hardware circuit of the apparatus shown in FIG. 12. The communication apparatus is applicable to the foregoing flowcharts, and performs the functions of the terminal device or the network device in the foregoing method embodiments. For ease of description, FIG. 13 shows only main components of the communication apparatus.

As shown in FIG. 13, the communication apparatus 1300 includes a processor 1310 and an interface circuit 1320. The processor 1310 and the interface circuit 1320 are coupled to each other. It may be understood that the interface circuit 1320 may be a transceiver or an input/output interface. Optionally, the communication apparatus 1300 may further include a memory 1330, configured to store instructions executed by the processor 1310, input data required for running instructions by the processor 1310, or data generated after the processor 1310 runs instructions.

When the communication apparatus 1300 is configured to implement the methods shown in FIG. 3 to FIG. 11, the processor 1310 is configured to implement a function of the processing unit 1201. The interface circuit 1320 is configured to implement a function of the communication unit 1202.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements functions of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device or a transistor logic device. The general-purpose processor may be a microprocessor, or may be any conventional processor.

The memory in this embodiment of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, or a storage medium of any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be in a network device or a terminal device. The processor and the storage medium may alternatively exist in the network device or the terminal device as discrete components.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clearly that, a person skilled in the art can make various modifications and variations to this application without departing from the scope of this application. This application is intended to cover these modifications and variations of this application provided that they fall within the scope of protection defined by the following claims and their equivalent technologies.

## Claims

1. A communication method, wherein the method is applied to a terminal device having a capability of supporting dual SIMs, and comprises:
determining, by the terminal device, a first message, wherein
when the terminal device comprises only a first subscriber identity module card, the first message comprises first capability information, and a switching delay indicated by the first capability information is a first delay; or when the terminal device comprises the first subscriber identity module card and a second subscriber identity module card, the first message comprises second capability information, a switching delay indicated by the second capability information is a second delay, the second delay is greater than the first delay, and the switching delay is a delay required for the terminal device to switch between different carriers in a first network corresponding to the first subscriber identity module card; and
sending, by the terminal device, the first message to a first network device in the first network.

2. The method according to claim 1, wherein when the first message comprises the first capability information, a delay for switching between a first carrier and a second carrier by the terminal device is the first delay; or
when the first message comprises the second capability information, a delay for switching between the first carrier and the second carrier by the terminal device is the second delay; and
the first carrier and the second carrier are carriers configured by the first network device for the terminal device.

3. The method according to claim 1 or 2, wherein the first carrier is an uplink carrier, and the second carrier is an uplink carrier.

4. The method according to any one of claims 1 to 3, wherein the method further comprises:
sending, by the terminal device, a second message to a second network device in a second network corresponding to the second subscriber identity module card, wherein
when the terminal device comprises only the first subscriber identity module card, the second message comprises third capability information, and the third capability information indicates a third delay; or when the terminal device comprises the first subscriber identity module card and the second subscriber identity module card, the second message comprises fourth capability information, the fourth capability information indicates a fourth delay, the fourth delay is greater than the third delay, and each of the fourth delay and the third delay is a delay required for the terminal device to switch between different carriers in the second network.

5. The method according to any one of claims 1 to 4, wherein the first message is a capability information reporting message, the capability information reporting message comprises an uplink transmit path switching period field, and the uplink transmit path switching period field is used to carry the first capability information or the second capability information.

6. A communication method, wherein the method is applied to a terminal device having a capability of supporting dual SIMs, and comprises:
sending, by the terminal device, first indication information to a first network device in a first network, wherein the first indication information indicates a fifth delay; and when the terminal device is in a connected mode in the first network, and the terminal device is in the connected mode in a second network, sending, by the terminal device, second indication information to the first network device, wherein the second indication information indicates a sixth delay, the sixth delay is greater than the fifth delay, and each of the fifth delay and the sixth delay is a delay required for the terminal device to switch between different carriers in the first network.

7. The method according to claim 6, wherein when the terminal device is in the connected mode in the first network, and the terminal device is in a non-connected mode in the second network, the terminal device performs switching between a first carrier and a second carrier based on the fifth delay, and the first carrier and the second carrier are carriers configured by the first network device for the terminal device.

8. The method according to claim 6 or 7, wherein when the terminal device is in the connected mode in the first network, and the terminal device is in the connected mode in the second network, the terminal device performs switching between the first carrier and the second carrier based on the sixth delay.

9. The method according to any one of claims 6 to 8, wherein the method further comprises:
if the terminal device keeps in the connected mode in the first network, and the terminal device releases a connection to the second network, sending, by the terminal device, the first indication information to the first network device.

10. The method according to any one of claims 6 to 9, wherein the first carrier is an uplink carrier, and the second carrier is an uplink carrier.

11. The method according to any one of claims 6 to 10, wherein the first indication information or the second indication information is in an uplink transmit path switching period field in a capability information reporting message.

12. A communication apparatus, wherein the communication apparatus has a capability of supporting dual SIMs, and comprises:
a processing unit, configured to determine a first message, wherein
when only a first subscriber identity module card is comprised, the first message comprises first capability information, and a switching delay indicated by the first capability information is a first delay; or when the first subscriber identity module card and a second subscriber identity module card are comprised, the first message comprises second capability information, a switching delay indicated by the second capability information is a second delay, the second delay is greater than the first delay, and the switching delay is a delay required for the terminal device to switch between different carriers in a first network corresponding to the first subscriber identity module card; and
a communication unit, configured to send the first message to a first network device in the first network.

13. The apparatus according to claim 12, wherein when the first message comprises the first capability information, a delay for switching between a first carrier and a second carrier is the first delay; or
when the first message comprises the second capability information, a delay for switching between the first carrier and the second carrier is the second delay; and
the first carrier and the second carrier are carriers configured by the first network device.

14. The apparatus according to claim 12 or 13, wherein the first carrier is an uplink carrier, and the second carrier is an uplink carrier.

15. The apparatus according to any one of claims 12 to 14, wherein the communication unit is further configured to:
send a second message to a second network device in a second network corresponding to the second subscriber identity module card, wherein
when only the first subscriber identity module card is comprised, the second message comprises third capability information, and the third capability information indicates a third delay; or when the first subscriber identity module card and the second subscriber identity module card are comprised, the second message comprises fourth capability information, the fourth capability information indicates a fourth delay, the fourth delay is greater than the third delay, and each of the fourth delay and the third delay is a delay required for the terminal device to switch between different carriers in the second network.

16. The apparatus according to any one of claims 12 to 15, wherein the first message is a capability information reporting message, the capability information reporting message comprises an uplink transmit path switching period field, and the uplink transmit path switching period field is used to carry the first capability information or the second capability information.

17. A communication apparatus, wherein the communication apparatus has a capability of supporting dual SIMs, and comprises:
a processing unit, configured to send first indication information to a first network device in a first network through a communication unit, wherein the first indication information indicates a fifth delay; and
the processing unit is configured to: when the communication apparatus is in a connected mode in the first network and is in the connected mode in a second network, send second indication information to the first network device through the communication unit, wherein the second indication information indicates a sixth delay, the sixth delay is greater than the fifth delay, and each of the fifth delay and the sixth delay is a delay required for switching between different carriers in the first network.

18. The apparatus according to claim 17, wherein the processing unit is further configured to: when the communication apparatus is in the connected mode in the first network and is in a non-connected mode in the second network, perform switching between a first carrier and a second carrier based on the fifth delay, and the first carrier and the second carrier are carriers configured by the first network device.

19. The apparatus according to claim 17 or 18, wherein the processing unit is further configured to: when the communication apparatus is in the connected mode in the first network and is in the connected mode in the second network, perform switching between the first carrier and the second carrier based on the sixth delay.

20. The apparatus according to any one of claims 17 to 19, wherein the communication unit is further configured to:
if the communication apparatus keeps in the connected mode in the first network and releases a connection to the second network, send the first indication information to the first network device.

21. The apparatus according to any one of claims 17 to 20, wherein the first carrier is an uplink carrier, and the second carrier is an uplink carrier.

22. The apparatus according to any one of claims 17 to 21, wherein the first indication information or the second indication information is in an uplink transmit path switching period field in a capability information reporting message.

23. A communication apparatus, comprising a processor, an interface circuit, and a memory, wherein
the processor is configured to execute a computer program or instructions that is/are stored in the memory, so that the communication apparatus implements the method according to any one of claims 1 to 11.

24. A communication apparatus, comprising a processor and a memory, wherein
the processor is configured to execute a computer program or instructions that is/are stored in the memory, so that the communication apparatus implements the method according to any one of claims 1 to 11.

25. A computer-readable storage medium, storing a computer program or instructions, wherein when the computer program or the instructions is/are run on a computer, the computer is enabled to implement the method according to any one of claims 1 to 11.

26. A computer program product, wherein when a computer reads and executes the computer program product, the computer is enabled to implement the method according to any one of claims 1 to 11.

27. A chip, comprising a processor, wherein the processor is coupled to a memory, and is configured to execute a computer program or instructions that is/are stored in the memory, so that the chip implements the method according to any one of claims 1 to 11.
